(19) Europäisches Patentamt
European Patent Office
Office européen des brevets

(11) Veröffentlichungsnummer : **0 077 296**
**B1**

(12) **EUROPÄISCHE PATENTSCHRIFT**

(45) Veröffentlichungstag der Patentschrift : **28.08.85**

(51) Int. Cl.⁴ : **C 07 F 7/22**, A 01 N 55/04

(21) Anmeldenummer : **82810409.1**

(22) Anmeldetag : **04.10.82**

# (54) Organozinnverbindungen.

(30) Priorität : **08.10.81 CH 6456/81**
**22.10.81 CH 6750/81**
**28.05.82 CH 3316/82**
**03.06.82 CH 3415/82**

(43) Veröffentlichungstag der Anmeldung : **20.04.83 Patentblatt 83/16**

(45) Bekanntmachung des Hinweises auf die Patenterteilung : **28.08.85 Patentblatt 85/35**

(84) Benannte Vertragsstaaten : **AT BE CH DE FR GB IT LI NL**

(56) Entgegenhaltungen : **DE-A- 2 554 790**

(73) Patentinhaber : **CIBA-GEIGY AG**
**Postfach**
**CH-4002 Basel (CH)**

(72) Erfinder : **Drabek, Jozef, Dr.**
**Benkenstrasse 12**
**CH-4104 Oberwil (CH)**

**EP 0 077 296 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft N-(3-Trimethylstannylalkylen)-N'-phenylsulfonyl- resp. -benzoylharnstoffe, Verfahren zu ihrer Herstellung und ihre Verwendung in der Schädlingsbekämpfung.

Die N-(3-Trimethylstannylalkylen)-N'-phenylsulfonyl- resp. -benzoylharnstoffe haben die Formel I

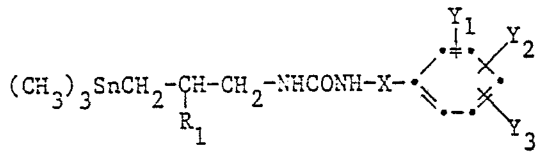

(I)

worin $R_1$ Wasserstoff, $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

Unter Halogen ist Fluor, Chlor, Brom oder Jod zu verstehen.

Die für $R_1$, $Y_1$, $Y_2$ und $Y_3$ stehenden Alkyl-, Halogenalkyl- und Alkoxygruppen können geradkettig oder verzweigt sein :

Beispiele solcher Gruppen sind u. a. : Methyl, Methoxy, Trifluormethyl, Aethyl, Aethoxy, Propyl, Isopropyl, n-Butyl, n-Pentyl und n-Hexyl sowie deren Isomere.

Beispiele von Cycloalkylgruppen bei $R_1$ sind u. a. : Cyclopropyl oder Cyclohexyl.

Bevorzugt sind Verbindungen der Formel I, worin $R_1$ Wasserstoff, X —CO— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten oder Verbindungen der Formel I, worin $R_1$ Wasserstoff, X —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten oder Verbindungen der Formel I, worin $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

Besonders bevorzugt sind Verbindungen der Formel I, worin $R_1$ Wasserstoff, X —CO—, $Y_1$ Halogen, $C_1$-$C_6$-Alkyl, $C_1$-$C_6$-Halogenalkyl, $C_1$-$C_6$-Alkoxy oder Nitro und $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten oder Verbindungen der Formel I, worin $R_1$ Methyl, X —CO—, $Y_1$ Wasserstoff, Fluor, Chlor, Methyl, Methoxy oder Nitro und $Y_2$ und $Y_3$ unabhängig voneinander Wasserstoff, Fluor, Chlor, Methyl oder Methoxy bedeuten.

Insbesondere bevorzugt sind aber Verbindungen der Formel I, worin $R_1$ Wasserstoff, X —CO—, $Y_1$ Fluor, Chlor, Methyl, Methoxy oder Nitro und $Y_2$ und $Y_3$ unabhängig voneinander Wasserstoff, Fluor, Chlor, Methyl oder Methoxy bedeuten.

Die Verbindungen der Formel I können nach folgenden an sich bekannten Methoden hergestellt werden :

1)

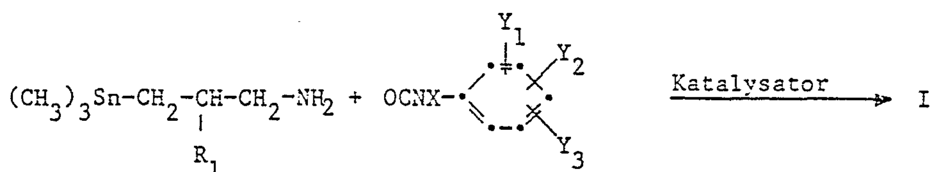


(II) (III)

2)

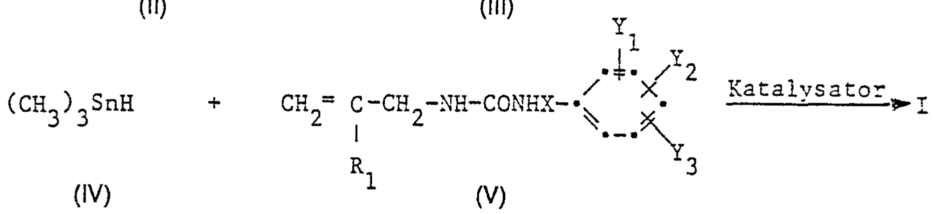


(IV) (V)

In den Formeln II bis V haben $R_1$, X, $Y_1$, $Y_2$ und $Y_3$ die für die Formel I angegebene Bedeutung.

Die Verfahren werden bei normalem Druck und einer Temperatur zwischen −30 bis 150 °C, insbesondere zwischen −10 bis 100 °C, und gegebenenfalls in Gegenwart eines Katalysators, wie z. B. Azoisobutyronitril und in einem Lösungsmittel durchgeführt.

Als Lösungsmittel kommen z. B. aliphatische, aromatische sowie halogenierte Kohlenwasserstoffe, insbesondere Benzol, Xylol, Toluol, Chloroform oder Chlorbenzol weiter Ketone wie Aceton, Methyläthylketon, Nitrile wie Acetonitril, Formamide wie Dimethylformamid in Frage.

Die Ausgangsstoffe der Formeln III bis V sind bekannt oder können nach bekannten Methoden hergestellt werden.

Die Verbindungen der Formel II können nach an sich bekannten Methoden z. B. wie folgt hergestellt werden :

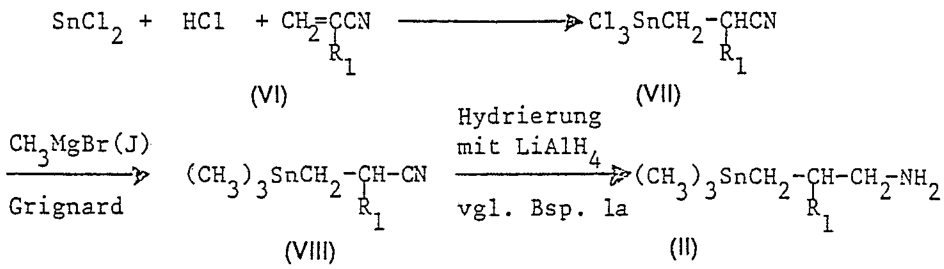


(VI) (VII) (VIII) (II)

In den Formeln II, VI, VII und VIII hat $R_1$ die für Formel I angegebene Bedeutung.

Die Verbindungen der Formel I eignen sich zur Bekämpfung von verschiedenartigen Schädlingen an Tieren und Pflanzen.

So eignen sich die Verbindungen der Formel I zur Bekämpfung von Bakterien und Pilzen, insbesondere aber von Insekten z. B. der Ordnung Lepidoptera, Coleoptera, Homoptera, Heteroptera, diptera, Thysanoptera, Orthoptera, Anoplura, Siphonaptera, Mallophaga, Thysanura, Psocoptera und Hymenoptera sowie Milben und Zecken der Ordnung Acarina.

Es hat sich gezeigt, dass die Verbindungen der Formel I eine starke Wirkung sowohl gegen pflanzenschädigende Milben : z. B. der Familien Tetranychidae, Tarsonemidae, Eriophyidae, Tyroglyphidae und Glycyphagidae als auch gegen ektoparasitäre Milben und Zecken : z. B. der Familien Ixodidae, Argasidae, Sarcoptera und Dermanyssidae aufweisen.

Die akarizide bzw. insektizide Wirkung lässt sich durch Zusatz von anderen Insektiziden und/oder Akariziden wesentlich verbreitern und an gegebene Umstände anpassen. Als Zusätze eignen sich z. B. org. Phosphorverbindungen ; Nitrophenole und deren Derivate ; Formamidine ; Harnstoffe ; pyrethrinartige Verbindungen sowie Carbamate und chlorierte Kohlenwasserstoffe.

Weiter zeigen die Substanzen der Formel I fungizide Wirkung.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnden Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxidiertes Kokosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Tallöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 2 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylenpolyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)-äthylammoniumbromid.

Die in der Formulierungstechnik gebräuchlichen Tenside sind u. a. in folgender Publikation beschrieben :

« Mc Cutcheons's Detergents and Emulsifiers Annual » MC Publishing Corp., Ridgewood, New Jersey, 1979.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I (% = Gewichtsprozent)

| 1. Emulsions-Konzentrate | a) | b) | c) |
|---|---|---|---|
| Wirkstoff | 25% | 40% | 50% |
| Ca-Dodecylbenzolsulfonat | 5% | 8% | 6% |
| Ricinusöl-polyäthylenglykoläther (36 Mol AeO) | 5% | - | - |
| Tributylphenol-polyäthylenglykoläther (30 Mol AeO) | - | 12% | 4% |
| Cycolhexanon | - | 15% | 20% |
| Xylolgemisch | 65% | 25% | 20% |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80% | 10% | 5% | 95% |
| Aethylenglykol-monomethyläther | 20% | - | - | - |
| Polyäthylenglykol MG 400 | - | 70% | - | - |
| N-Methyl-2-pyrrolidon | - | 20% | - | - |
| Epoxidiertes Kokosnussöl | - | - | 1% | 5% |
| Benzin (Siedegrenzen 160-190°C) | - | - | 94% | - |

Die Lösungen sind zur Anwendung in Form kleinster Tropfen geeignet.

| 3. Granulate | a) | b) |
|---|---|---|
| Wirkstoff | 5% | 10% |
| Kaolin | 94% | - |
| Hochdisperse Kieselsäure | 1% | - |
| Attapulgit | - | 90% |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff | 2% | 5% |
| Hochdisperse Kieselsäure | 1% | 5% |
| Talkum | 97% | - |
| Kaolin | - | 90% |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

| 5. Spritzpulver | a) | b) | c) |
|---|---|---|---|
| Wirkstoff | 25% | 50% | 75% |
| Na-Ligninsulfonat | 5% | 5% | - |
| Na-Laurylsulfat | 3% | - | 5% |
| Na-Diisobutylnaphthalinsulfonat | - | 6% | 10% |
| Octylphenolpolyäthylenglykoläther (7-8 Mol AeO) | - | 2% | - |
| Hochdisperse Kieselsäure | 5% | 10% | 10% |
| Kaolin | 62% | 27% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff | 5% | 8% |
| Talkum | 95% | - |
| Kaolin | - | 92% |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

9. Umhüllungsgranulat

| | |
|---|---|
| Wirkstoff | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

10. Suspensions-Konzentrat

| | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Beispiel 1

a) Herstellung von 2-Methyl-3-trimethylstannylpropylamin.

Zu einer Lösung von 42,3 g 2-Methyl-3-trimethylstannylpropionitril (J. Organometall Chem. 86 (1975),

89), in 200 ml absolutem Aether wird während 50 Minuten eine Suspension von 13,8 g $LiAlH_4$ in 1 000 ml absolutem Aether bei 30 °C zugetropft.

Das Reaktionsgemisch wird zwei Stunden gerührt und zwölf Stunden bei 20 °C stehen gelassen. Bei 0 °C werden dem Reaktionsgemisch vorsichtig 50 ml Wasser und dann 50 ml 20 %ige Natronlauge zugetropft. Der Niederschlag wird abfiltriert, die organische Phase mit 50 ml Wasser gewaschen und über Natriumsulfat getrocknet. Das Lösungsmittel wird abgedampft und das Produkt destilliert. Man erhält die Verbindung der Formel

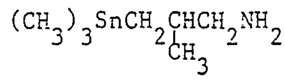

mit einem Siedepunkt von 73-75 °C/18 Pa.

b) Herstellung von 1-(2-Chlorbenzoyl)-3-(2-methyl-3-trimethylstannylpropyl)-harnstoff.

Zu einer Lösung von 3,89 g 2-Methyl-3-trimethylstannyl-propylamin in 50 ml Toluol werden bei 20 °C unter Rühren 3 g 2-Chlorbenzoylisocyanat zugetropft. Das Reaktionsgemisch wird eine Stunde bei 20 °C und zehn Stunden bei 80 °C gerührt. Nach dem Einengen des Reaktionsgemisches wird das Rohprodukt aus Hexan umkristallisiert. Man erhält die Verbindung Nr. 1 der Formel

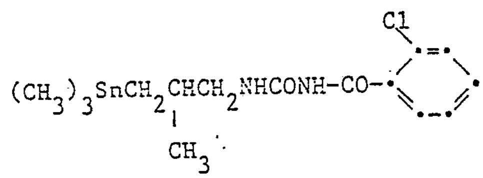

mit einem Schmelzpunkt von 66-68 °C.

Auf analoge Weise werden auch folgende Verbindungen hergestellt :

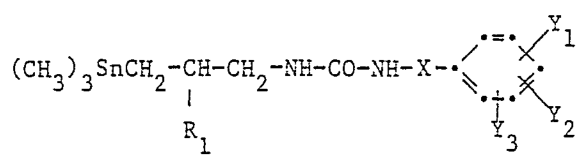

| Verbindungsnummer | $R_1$ | X | $Y_1$ | $Y_2$ | $Y_3$ | physikalische Daten |
|---|---|---|---|---|---|---|
| 2 | $CH_3$ | -CO- | 3 Cl | 4 Cl | H | Smp.: 118-120°C |
| 3 | $CH_3$ | -CO- | 2 Cl | H | 6 Cl | Smp.: 134-135°C |
| 4 | $CH_3$ | -CO- | H | H | H | $n_D^{20°}$ = 1,5518 |
| 5 | $CH_3$ | -CO- | $2CH_3$ | H | H | $n_D^{20°}$ = 1,5469 |
| 6 | $CH_3$ | -CO- | H | 4Cl | H | Smp.: 80-81°C |
| 7 | $CH_3$ | -CO- | $2CH_3$ | $4CH_3$ | H | $n_D^{20°}$ = 1,5431 |
| 8 | $CH_3$ | -CO- | H | $4NO_2$ | H | Smp.: 169-170°C |
| 9 | $CH_3$ | -CO- | $2OCH_3$ | H | H | $n_D^{20°}$ = 1,5578 |
| 10 | H | -CO- | 2Cl | H | H | Smp.: 91-92°C |
| 11 | H | -CO- | 2F | H | H | Smp.: 69-71°C |

(Fortsetzung)

| Verbindungs-nummer | $R_1$ | X | $Y_1$ | $Y_2$ | $Y_3$ | physikalische Daten |
|---|---|---|---|---|---|---|
| 12 | H | -CO- | 2F | H | 6F | Smp.: 100-103°C |
| 13 | H | -CO- | 2Cl | H | 6Cl | Smp.: 124-127°C |
| 14 | H | -CO- | H | H | H | Smp.: 50-52°C |
| 15 | H | -CO- | $2CH_3$ | H | H | Smp.: 45-49°C |
| 16 | H | -CO- | H | 4Cl | H | Smp.: 97-100°C |
| 17 | H | -CO- | 3Cl | 4Cl | H | Smp.: 118-119°C |
| 18 | H | -CO- | $3OCH_3$ | $4OCH_3$ | $5OCH_3$ | Smp.: 109-110°C |
| 19 | H | -CO- | H | $4NO_2$ | H | Smp.: 173-174°C |
| 20 | H | -CO- | $3OCH_3$ | H | H | $n_D^{20°}$ = 1,5555 |
| 21 | H | -CO- | H | $4-C(CH_3)_3$ | H | Smp.: 84-85°C |

c) Herstellung von N-(3-Trimethylstannylpropyl)-N'-phenylsulfonylharnstoff.

Zu einer Lösung von 3,7 g 3-Trimethylstannylpropylamin in 50 ml Acetonitril wird 0,1 ml Triäthylamin zugegeben. Unter Rühren werden dann bei 10 °C 3 ml Phenylsulfonylisocyanat zugetropft. Das Reaktionsgemisch wird eine Stunde bei 20 °C und zehn Stunden bei Rückflusstemperatur gerührt. Nach dem Einengen des Reaktionsgemisches erhält man die Verbindung Nr. 22 der Formel

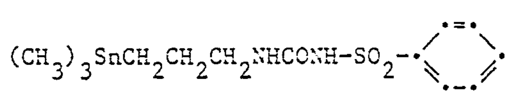

mit einer Refraktion von $n_D^{50°}$ = 1,536 7.

Auf analoge Weise wird auch folgende Verbindung hergestellt:

Nr. 23

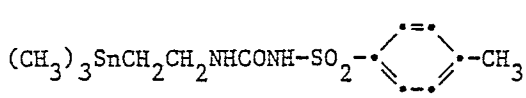

Smp.: 163-164 °C.

Beispiel 2

Insektizide Frassgift-Wirkung

Baumwollpflanzen werden mit einer Versuchslösung, enthaltend 50, 100 und 200 ppm der zu prüfenden Verbindung, besprüht. Nach dem Antrocknen des Belages werden die Baumwollpflanzen mit Spodoptera littoralis-Larven $L_3$ besetzt.

Der Versuch wird bei 24 °C und 60 % relativer Luftfeuchtigkeit durchgeführt. Verbindungen gemäss Beispiel 1 zeigen im obigen Test die in der folgenden Tabelle angegebene Wirkung gegenüber Spodoptera littoralis-Larven.

Biologische Versuchsergebnisse

In der folgenden Tabelle sind Versuchsergebnisse auf der Basis des vorstehenden Beispiels aufgeführt, und zwar mit folgendem Bewertungsindex in bezug auf die prozentuale Abtötung der Schädlinge.

A : 70-100 % Abtötung bei 50 ppm Wirkstoffkonzentration
B : 70-100 % Abtötung bei 100 ppm Wirkstoffkonzentration
C : 70-100 % Abtötung bei 200 ppm Wirkstoffkonzentration

| Verbindung Nr. | Wirksamkeit gegen Spodoptera littoralis-Larven |
|---|---|
| 1 | A |
| 2 | B |
| 3 | A |
| 4 | B |
| 5 | A |
| 6 | C |
| 7 | B |
| 8 | C |
| 9 | B |
| 10 | A |
| 11 | A |
| 12 | A |
| 13 | B |
| 14 | B |
| 15 | C |
| 16 | A |
| 17 | A |
| 18 | C |
| 19 | C |
| 20 | B |
| 21 | B |
| 22 | B |
| 23 | B |

**Patentansprüche**

1. N-(3-Trimethylstannylalkylen)-N'-phenylsulfonyl-resp. -benzoylharnstoffe der Formel

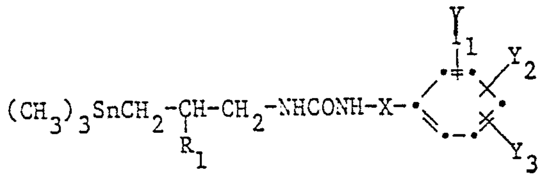

(I)

worin $R_1$ Wasserstoff, $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

2. Eine Verbindung gemäss Anspruch 1, worin $R_1$ Wasserstoff, X —CO— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

3. Eine Verbindung gemäss Anspruch 1, worin $R_1$ Wasserstoff, X —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

4. Eine Verbindung gemäss Anspruch 1, worin $R_1$ $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

5. Eine Verbindung gemäss Anspruch 2, worin $R_1$ Wasserstoff, X —CO—, ($Y_1$ Halogen), $C_1$-$C_6$-Alkyl, $C_1$-$C_6$-Halogenalkyl, $C_1$-$C_6$-Alkoxy oder Nitro und $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

6. Eine Verbindung gemäss Anspruch 5, worin $R_1$ Wasserstoff, X —CO—, $Y_1$ Fluor, Chlor, Methyl, Methoxy oder Nitro und $Y_2$ und $Y_3$ unabhängig voneinander Wasserstoff, Fluor, Chlor, Methyl oder Methoxy bedeuten.

7. Eine Verbindung gemäss Anspruch 4, worin $R_1$ Methyl, X —CO—, $Y_1$ Wasserstoff, Fluor, Chlor, Methyl, Methoxy oder Nitro und $Y_2$ und $Y_3$ unabhängig voneinander Wasserstoff, Fluor, Chlor, Methyl oder Methoxy bedeuten.

8. Die Verbindung gemäss Anspruch 7 der Formel

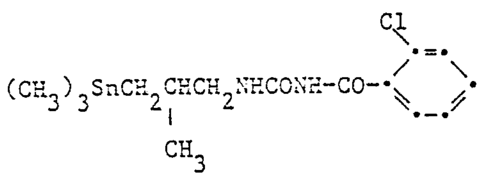

9. Die Verbindung gemäss Anspruch 7 der Formel

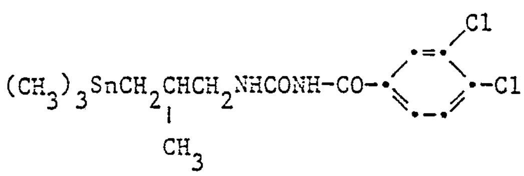

10. Die Verbindung gemäss Anspruch 7 der Formel

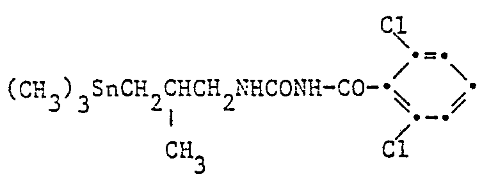

11. Die Verbindung gemäss Anspruch 7 der Formel

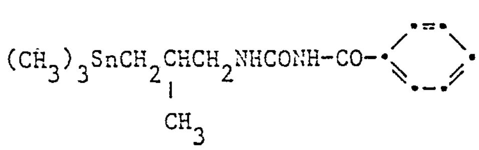

12. Die Verbindung gemäss Anspruch 7 der Formel

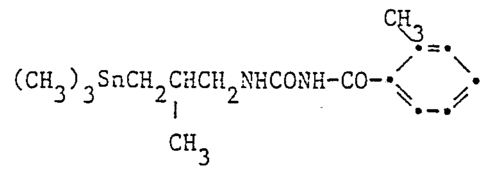

13. Die Verbindung gemäss Anspruch 7 der Formel

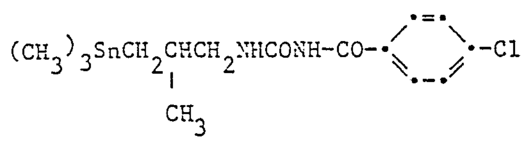

14. Die Verbindung gemäss Anspruch 7 der Formel

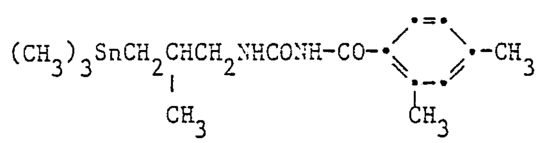

15. Die Verbindung gemäss Anspruch 7 der Formel

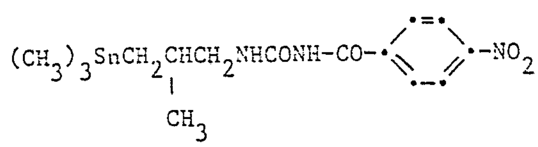

16. Die Verbindung gemäss Anspruch 7 der Formel

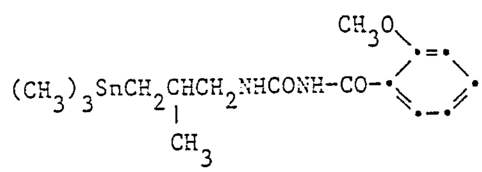

17. Die Verbindung gemäss Anspruch 4 der Formel

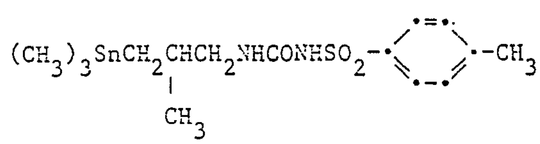

18. Die Verbindung gemäss Anspruch 3 der Formel

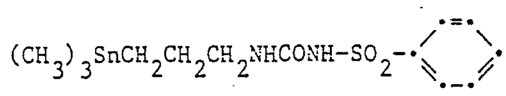

19. Die Verbindung gemäss Anspruch 6 der Formel

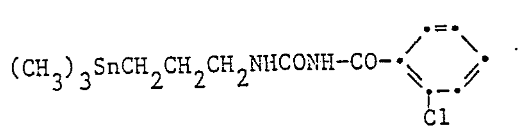

20. Die Verbindung gemäss Anspruch 6 der Formel

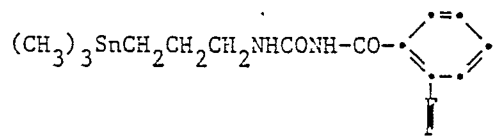

21. Die Verbindung gemäss Anspruch 6 der Formel

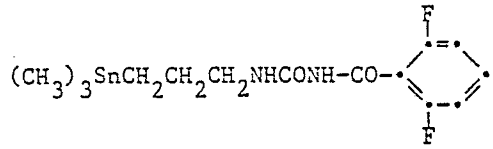

22. Die Verbindung gemäss Anspruch 6 der Formel

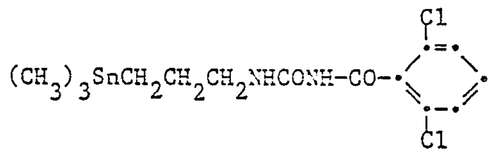

23. Die Verbindung gemäss Anspruch 2 der Formel

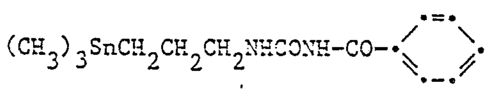

24. Die Verbindung gemäss Anspruch 6 der Formel

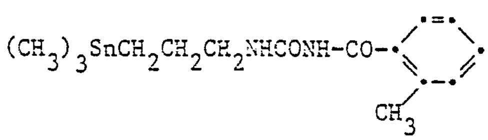

25. Die Verbindung gemäss Anspruch 6 der Formel

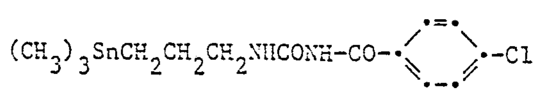

26. Die Verbindung gemäss Anspruch 6 der Formel

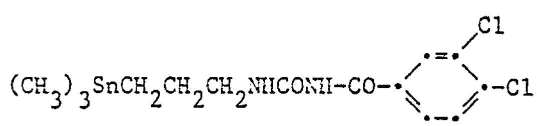

27. Die Verbindung gemäss Anspruch 6 der Formel

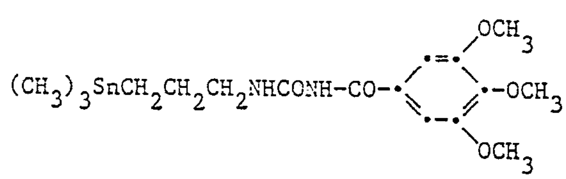

28. Die Verbindung gemäss Anspruch 6 der Formel

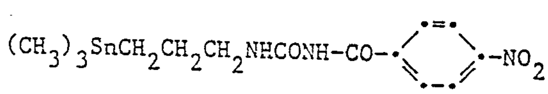

29. Die Verbindung gemäss Anspruch 6 der Formel

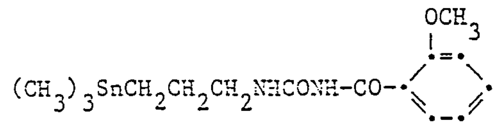

30. Die Verbindung gemäss Anspruch 5 der Formel

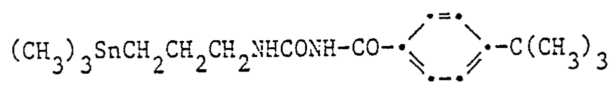

31. Verfahren zur Herstellung von Verbindungen gemäss Anspruch 1, dadurch gekennzeichnet, dass man gegebenenfalls in Gegenwart eines Katalysators und eines Lösungsmittels

a) eine Verbindung der Formel

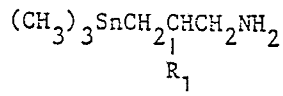

mit einer Verbindung der Formel

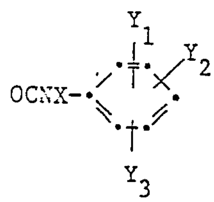

oder

b) die Verbindung der Formel

$(CH_3)_3SnH$

mit einer Verbindung der Formel

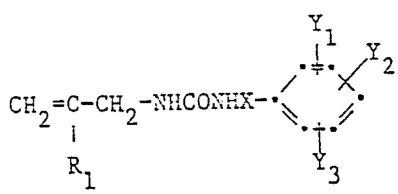

umsetzt, worin $R_1$, X, $Y_1$, $Y_2$ und $Y_3$ die im Anspruch 1 angegebene Bedeutung haben.

32. Ein Schädlingsbekämpfungsmittel, welches neben einem geeigneten Träger- und/oder anderen Zuschlagstoff als aktive Komponente eine Verbindung gemäss Anspruch 1 enthält.

33. Verwendung einer Verbindung gemäss Anspruch 1 zur Bekämpfung von Schädlingen an Tieren und Pflanzen.

34. Verwendung gemäss Anspruch 33 zur Bekämpfung von Insekten und Vertretern der Ordnung Akarina.

**Patentansprüche** (für den Vertragsstaat AT)

1. Ein Schädlingsbekämpfungsmittel, welches neben flüssigen und festen Zusatzstoffen als aktive Komponente einen N-(3-Trimethylstannylalkylen)-N'-phenylsulfonyl-resp. -benzoyl-harnstoff der Formel

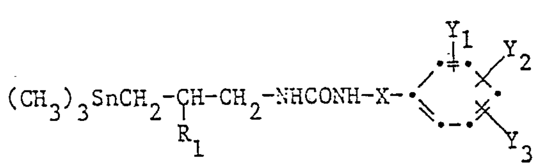

(I)

enthält, worin $R_1$ Wasserstoff $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Halogenalkyl, $C_1$-$C_6$-Alkyl, $C_1$-$C_6$-Halogenalkyl, $C_1$-$C_6$-Alkoxy oder Nitro bedeuten.

2. Ein Mittel gemäss Anspruch 1, worin in der Formel I $R_1$ Wasserstoff, X —CO— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder nitro bedeuten.

3. Ein Mittel gemäss Anspruch 1, worin in der Formel I $R_1$ Wasserstoff, X —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

4. Ein Mittel gemäss Anspruch 1, worin in der Formel I $R_1$ $C_1$-$C_6$-Alkyl oder $C_3$-$C_8$-Cycloalkyl, X —CO— oder —$SO_2$— und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

5. Ein Mittel gemäss Anspruch 2, worin in der Formel I $R_1$ Wasserstoff, X —CO—, $Y_1$ Halogen, $C_1$-$C_6$-Alkyl, $C_1$-$C_6$-Halogenalkyl, $C_1$-$C_6$-Alkoxy oder Nitro und $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten.

6. Ein Mittel gemäss Anspruch 5, worin in der Formel I $R_1$ Wasserstoff, X —CO—, $Y_1$ Fluor, Chlor, Methyl, Methoxy oder Nitro und $Y_2$ und $Y_3$ unabhängig voneinander Wasserstoff, Fluor, Chlor, Methyl oder Methoxy bedeuten.

7. Ein Mittel gemäss Anspruch 4, worin in der Formel I $R_1$ Methyl, X —CO—, $Y_1$ Wasserstoff, Fluor, Chlor, Methyl, Methoxy oder Nitro und $Y_2$ und $Y_3$ unabhängig voneinander Wasserstoff, Fluor, Chlor, Methyl oder Methoxy bedeuten.

8. Ein Mittel gemäss Anspruch 7, welches als aktive Komponente die Verbindung der Formel

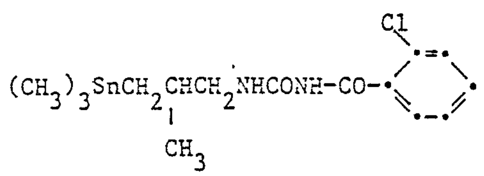

enthält.

9. Ein Mittel gemäss Anspruch 7, welches als aktive Komponente die Verbindung der Formel

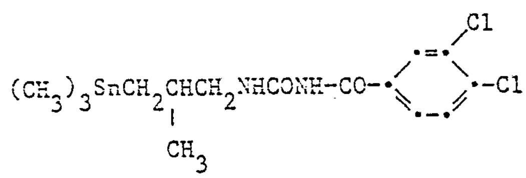

enthält.

10. Ein Mittel gemäss Anspruch 7, welches als aktive Komponente die Verbindung der Formel

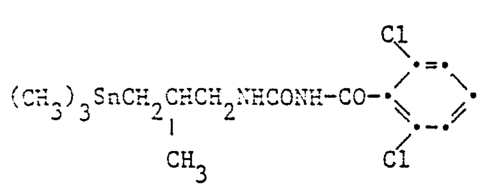

enthält.

11. Ein Mittel gemäss Anspruch 7, welches als aktive Komponente die Verbindung der Formel

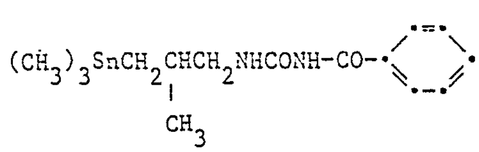

enthält.

12. Ein Mittel gemäss Anspruch 7, welches als aktive Komponente die Verbindung der Formel

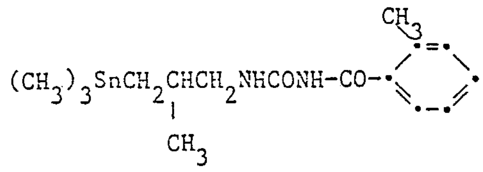

enthält.

13. Ein Mittel gemäss Anspruch 7, welches als aktive Komponente die Verbindung der Formel

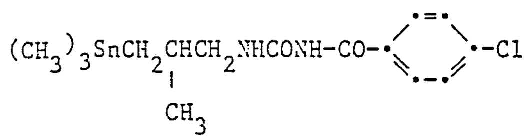

enthält.

14. Ein Mittel gemäss Anspruch 7, welches als aktive Komponente die Verbindung der Formel

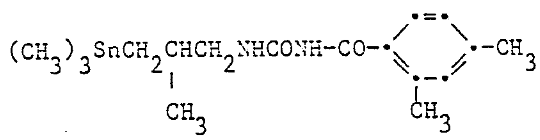

enthält.

15. Ein Mittel gemäss Anspruch 7, welches als aktive Komponente die Verbindung der Formel

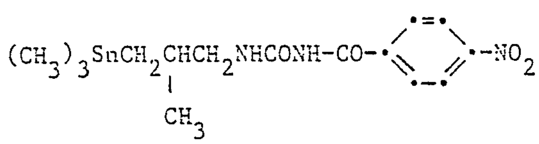

enthält.

16. Ein Mittel gemäss Anspruch 7, welches als aktive Komponente die Verbindung der Formel

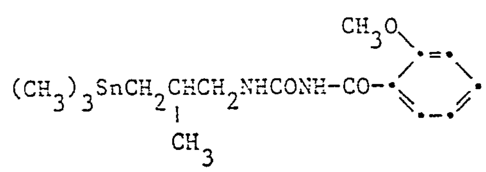

enthält.

17. Ein Mittel gemäss Anspruch 4, welches als aktive Komponente die Verbindung der Formel

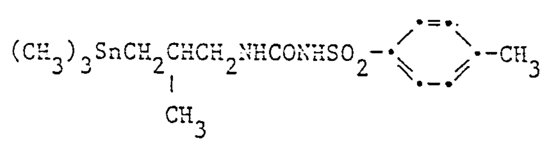

enthält.

18. Ein Mittel gemäss Anspruch 3, welches als aktive Komponente die Verbindung der Formel

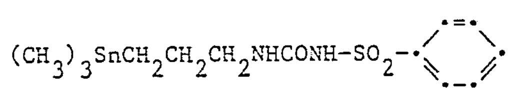

enthält.

19. Ein Mittel gemäss Anspruch 6, welches als aktive Komponente die Verbindung der Formel

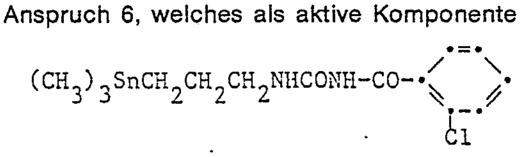

enthält.

20. Ein Mittel gemäss Anspruch 6, welches als aktive Komponente die Verbindung der Formel

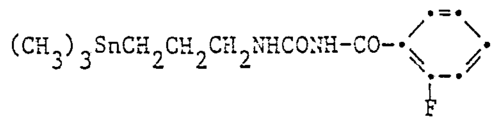

enthält.

21. Ein Mittel gemäss Anspruch 6, welches als aktive Komponente die Verbindung der Formel

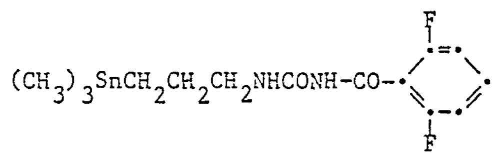

enthält.

22. Ein Mittel gemäss Anspruch 6, welches als aktive Komponente die Verbindung der Formel

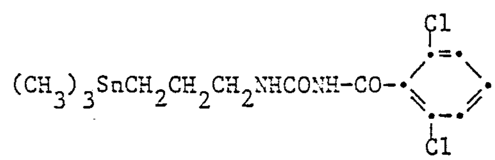

enthält.

23. Ein Mittel gemäss Anspruch 2, welches als aktive Komponente die Verbindung der Formel

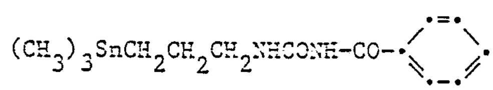

enthält.

24. Ein Mittel gemäss Anspruch 6, welches als aktive Komponente die Verbindung der Formel

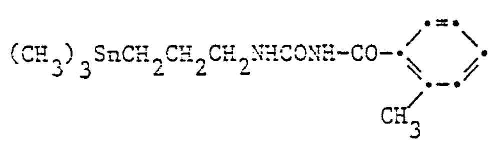

enthält.

25. Ein Mittel gemäss Anspruch 6, welches als aktive Komponente die Verbindung der Formel

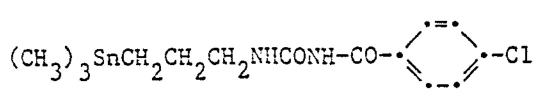

enthält.

26. Ein Mittel gemäss Anspruch 6, welches als aktive Komponente die Verbindung der Formel

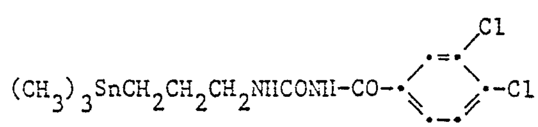

enthält.

27. Ein Mittel gemäss Anspruch 6, welches als aktive Komponente die Verbindung der Formel

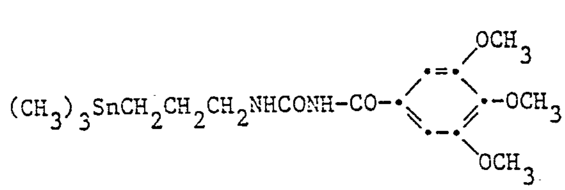

enthält.

28. Ein Mittel gemäss Anspruch 6, welches als aktive Komponente die Verbindung der Formel

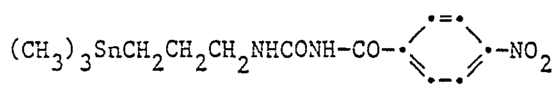

enthält.

29. Ein Mittel gemäss Anspruch 6, welches als aktive Komponente die Verbindung der Formel

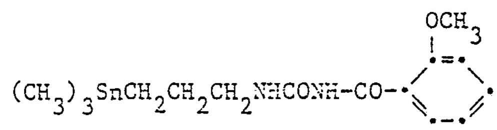

enthält.

30. Ein Mittel gemäss Anspruch 5, welches als aktive Komponente die Verbindung der Formel

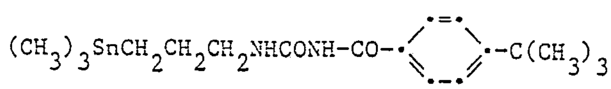

enthält.

31. Verfahren zur Herstellung von N-(3-Trimethylstannylalkylen)-N'-phenylsulfonyl- resp. -benzoylharnstoffen der Formel

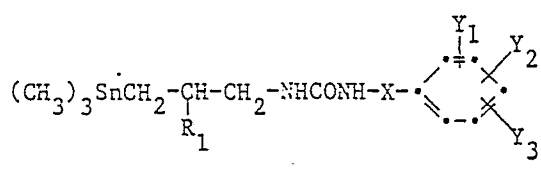

(I)

worin $R_1$ Wasserstoff, $C_1$-$C_6$-Alkyl oder $C_3$-$C_8$-Cycloalkyl, X —CO— oder —$SO_2$ und $Y_1$, $Y_2$ und $Y_3$ unabhängig voneinander Wasserstoff, Halogen, $C_1$-$C_6$-Alkyl, $C_1$-$C_6$-Halogenalkyl, $C_1$-$C_6$-Alkoxy oder Nitro bedeuten, dadurch gekennzeichnet, dass man gegebenenfalls in Gegenwart eines Katalysators und eines Lösungsmittels

a) eine Verbindung der Formel

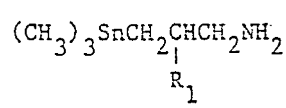

mit einer Verbindung der Formel

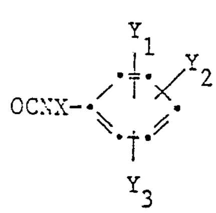

oder

b) die Verbindung der Formel

$(CH_3)_3SnH$

mit einer Verbindung der Formel

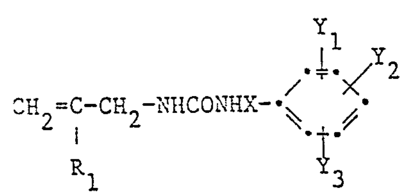

umsetzt, worin $R_1$, X, $Y_1$, $Y_2$ und $Y_3$ die für die Formel I angegebene Bedeutung haben.

32. Verwendung eines Mittels gemäss Anspruch 1 zur Bekämpfung von Schädlingen an Tieren und Pflanzen.

33. Verwendung gemäss Anspruch 32 zur Bekämpfung von Insekten und Vertretern der Ordnung Akarina.

**Claims** (for the Contracting States : BE, CH, DE, FR, GB, IT, LI, NL)

1. An N-(3-trimethylstannylalkylene)-N'-phenylsulfonyl- or -benzoylurea of the formula

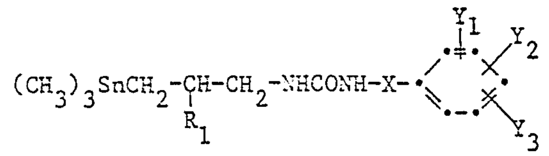

(I)

wherein $R_1$ is hydrogen, $C_1$-$C_6$alkyl or $C_3$-$C_8$cycloalkyl, X is —CO— or —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

2. A compound according to claim 1, wherein $R_1$ is hydrogen, X is —CO—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

3. A compound according to claim 1, wherein $R_1$ is hydrogen, X is —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

4. A compound according to claim 1, wherein $R_1$ is $C_1$-$C_6$alkyl or $C_3$-$C_8$cycloalkyl, X is —CO— or —$SO_2$—, and each of $Y_1$, $Y_2$ and $Y_3$ independently is hydrogen, halogen, $C_1$-$C_6$-alkyl, $C_1$-$C_6$haloalkyl, $C_1$-$C_6$alkoxy or nitro.

5. A compound according to claim 2, wherein $R_1$ is hydrogen, X is —CO—, $Y_1$ is halogen, $C_1$-$C_6$alkyl, $C_1$-$C_6$haloalkyl, $C_1$-$C_6$alkoxy or nitro, and each of $Y_2$ and $Y_3$ independently is hydrogen, halogen, $C_1$-$C_6$alkyl, $C_1$-$C_6$haloalkyl, $C_1$-$C_6$alkoxy or nitro.

6. A compound according to claim 5, wherein $R_1$ is hydrogen, X is —CO—, $Y_1$ is fluorine, chlorine, methyl, methoxy or nitro, and each of $Y_2$ and $Y_3$ independently is hydrogen, fluorine, chlorine, methyl or methoxy.

7. A compound according to claim 4, wherein $R_1$ is methyl, X is —CO—, $Y_1$ is hydrogen, fluorine, chlorine, methyl, methoxy or nitro, and each of $Y_2$ and $Y_3$ independently is hydrogen, fluorine, chlorine, methyl or methoxy.

8. The compound according to claim 7 of the formula

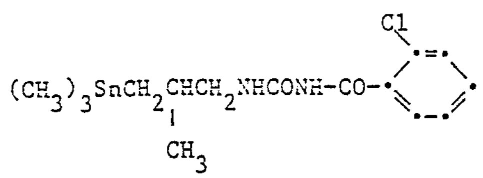

9. The compound according to claim 7 of the formula

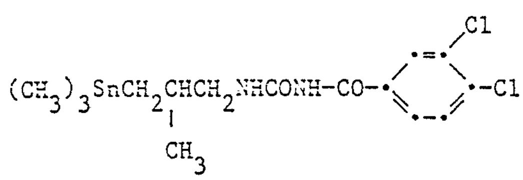

10. The compound according to claim 7 of the formula

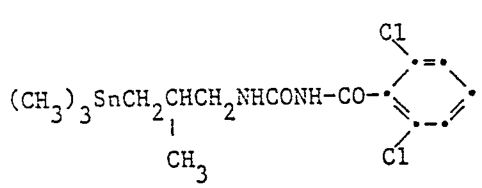

11. The compound according to claim 7 of the formula

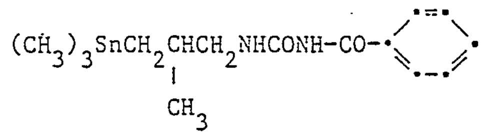

12. The compound according to claim 7 of the formula

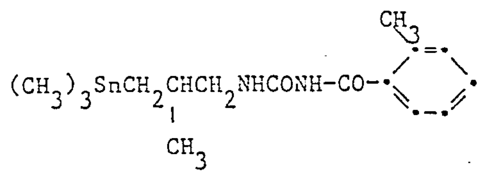

13. The compound according to claim 7 of the formula

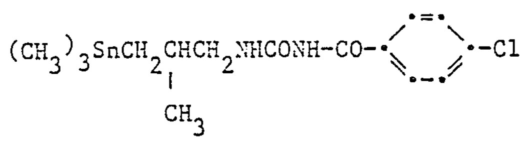

14. The compound according to claim 7 of the formula

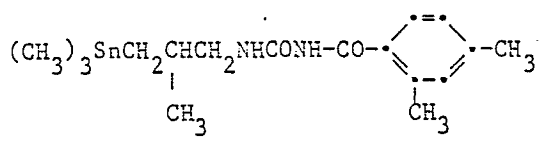

15. The compound according to claim 7 of the formula

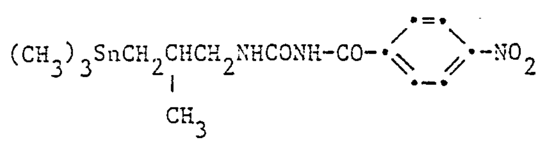

16. The compound according to claim 7 of the formula

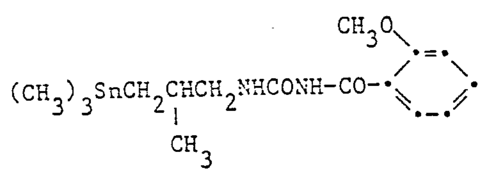

17. The compound according to claim 4 of the formula

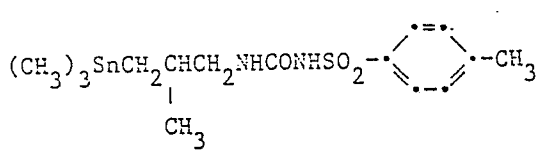

18. The compound according to claim 3 of the formula

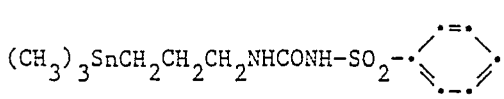

19. The compound according to claim 6 of the formula

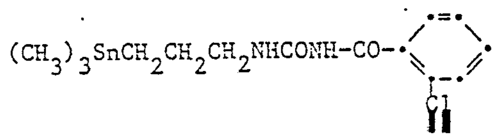

20. The compound according to claim 6 of the formula

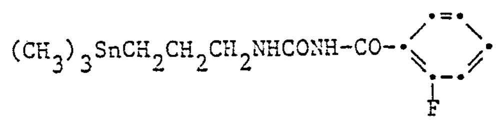

21. The compound according to claim 6 of the formula

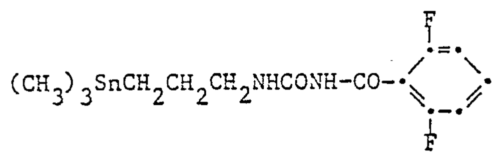

22. The compound according to claim 6 of the formula

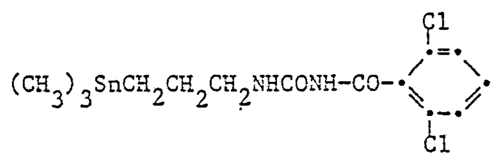

23. The compound according to claim 2 of the formula

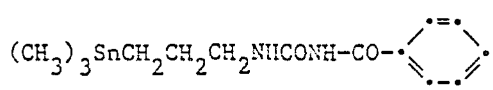

24. The compound according to claim 6 of the formula

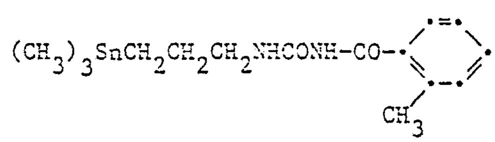

25. The compound according to claim 6 of the formula

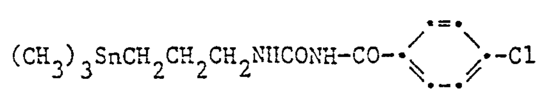

26. The compound according to claim 6 of the formula

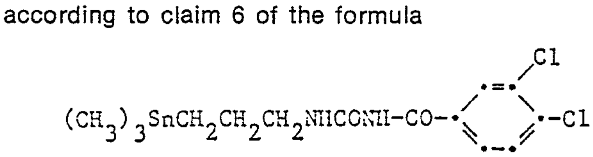

27. The compound according to claim 6 of the formula

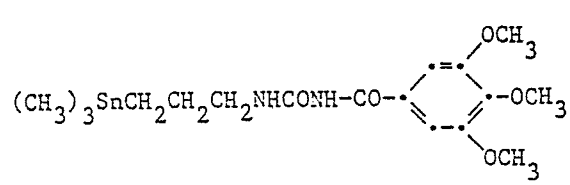

28. The compound according to claim 6 of the formula

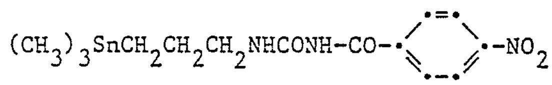

29. The compound according to claim 6 of the formula

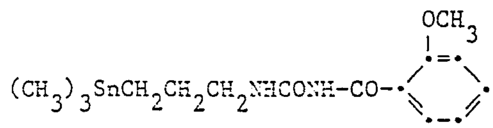

30. The compound according to claim 5 of the formula

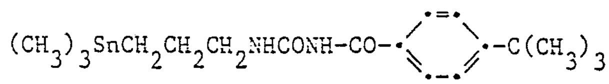

31. A process for the preparation of a compound according to claim 1, which process comprises reacting, in the presence or absence of a catalyst and of a solvent,

a) a compound of the formula

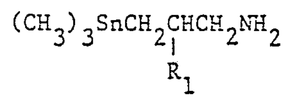

with a compound of the formula

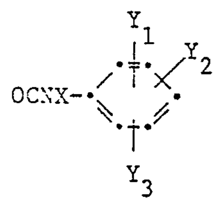

or

b) the compound of the formula

$(CH_3)_3SnH$

with a compound of the formula

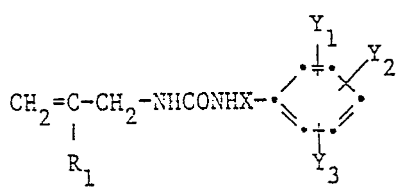

wherein $R_1$, X, $Y_1$, $Y_2$ and $Y_3$ are as defined in claim 1.

32. A pesticidal composition which contains a compound according to claim 1 as active ingredient, together with suitable carriers and/or other additives.

33. A method of controlling pests on animals and plants, which method comprises applying a pesticidally effective amount of a compound according to claim 1.

34. A method according to claim 33 for controlling insects and members of the order Acarina.

**Claims** (for the Contracting State AT)

1. A pesticidal composition which contains as active ingredient an N-(3-trimethylstannylalkylene)-N'-phenylsulfonyl- or -benzoylurea of the formula

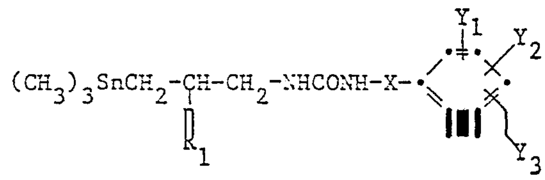

(I)

wherein $R_1$ is hydrogen, $C_1$-$C_6$alkyl or $C_3$-$C_8$cycloalkyl, X is —CO— or —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro, together with liquid and solid additives.

2. A composition according to claim 1, wherein in formula I $R_1$ is hydrogen, X is —CO—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

3. A composition according to claim 1, wherein in formula I $R_1$ is hydrogen, X is —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

4. A composition according to claim 1, wherein in formula I $R_1$ is $C_1$-$C_6$alkyl or $C_3$-$C_8$cycloalkyl, X is —CO— or —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro.

5. A composition according to claim 2, wherein in formula I $R_1$ is hydrogen, X is —CO—, $Y_1$ is halogen, $C_1$-$C_6$-alkyl, $C_1$-$C_6$haloalkyl, $C_1$-$C_6$alkoxy or nitro, and each of $Y_2$ and $Y_3$ independently is hydrogen, halogen, $C_1$-$C_6$alkyl, $C_1$-$C_6$haloalkyl, $C_1$-$C_6$alkoxy or nitro.

6. A composition according to claim 5, wherein in formula I $R_1$ is hydrogen, X is —CO—, $Y_1$ is fluorine, chlorine, methyl, methoxy or nitro, and each of $Y_2$ and $Y_3$ independently is hydrogen, fluorine, chlorine, methyl or methoxy.

7. A composition according to claim 4, wherein in formula I $R_1$ is methyl, X is —CO—, $Y_1$ is hydrogen, fluorine, chlorine, methyl, methoxy or nitro, and each of $Y_2$ and $Y_3$ independently is hydrogen, fluorine, chlorine, methyl or methoxy.

8. A composition according to claim 7, which contains as active ingredient the compound of the formula

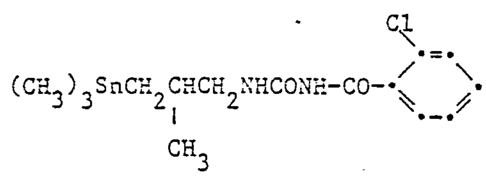

9. A composition according to claim 7, which contains as active ingredient the compound of the formula

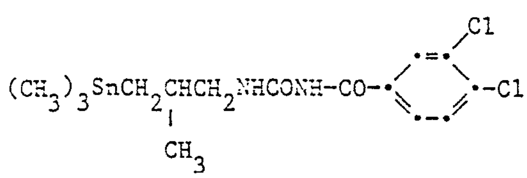

10. A composition according to claim 7, which contains as active ingredient the compound of the formula

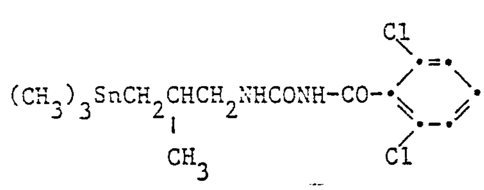

11. A composition according to claim 7, which contains as active ingredient the compound of the formula

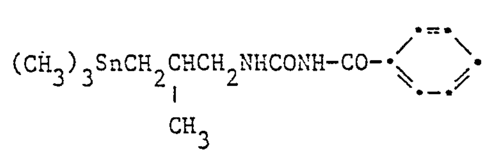

12. A composition according to claim 7, which contains as active ingredient the compound of the formula

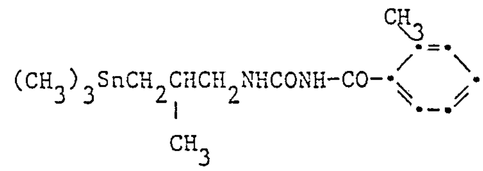

13. A composition according to claim 7, which contains as active ingredient the compound of the formula

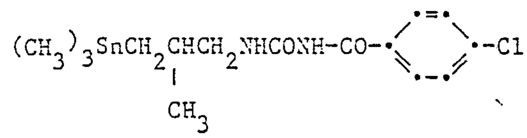

14. A composition according to claim 7, which contains as active ingredient the compound of the formula

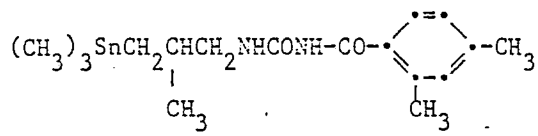

15. A composition according to claim 7, which contains as active ingredient the compound of the formula

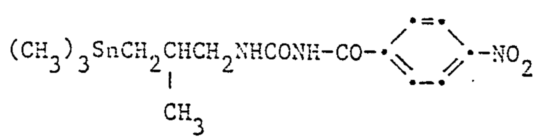

16. A composition according to claim 7, which contains as active ingredient the compound of the formula

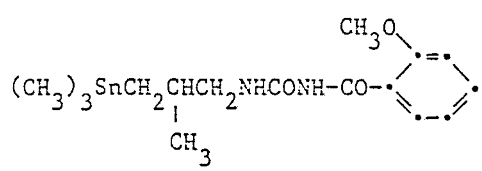

17. A composition according to claim 4, which contains as active ingredient the compound of the formula

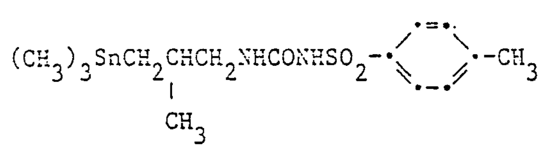

18. A composition according to claim 3, which contains as active ingredient the compound of the formula

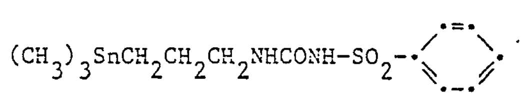

19. A composition according to claim 6, which contains as active ingredient the compound of the formula

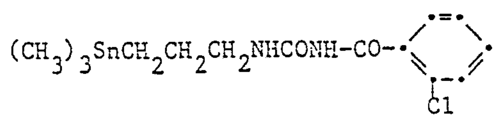

20. A composition according to claim 6, which contains as active ingredient the compound of the formula

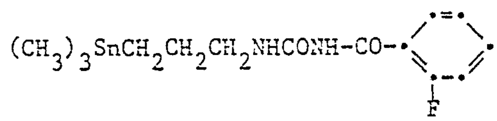

21. A composition according to claim 6, which contains as active ingredient the compound of the formula

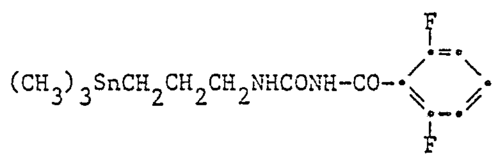

22. A composition according to claim 6, which contains as active ingredient the compound of the formula

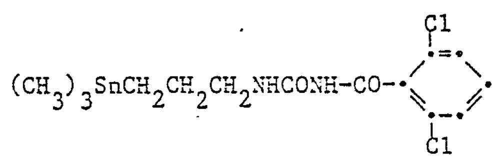

23. A composition according to claim 2, which contains as active ingredient the compound of the formula

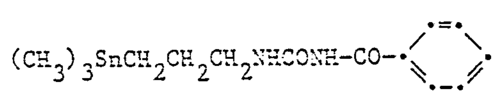

24. A composition according to claim 6, which contains as active ingredient the compound of the formula

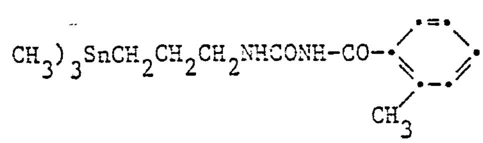

25. A composition according to claim 6, which contains as active ingredient the compound of the formula

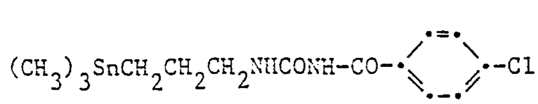

26. A composition according to claim 6, which contains as active ingredient the compound of the formula

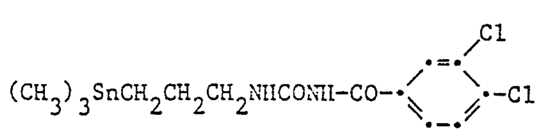

27. A composition according to claim 6, which contains as active ingredient the compound of the formula

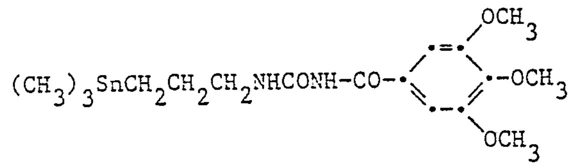

28. A composition according to claim 6, which contains as active ingredient the compound of the formula

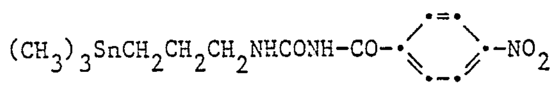

29. A composition according to claim 6, which contains as active ingredient the compound of the formula

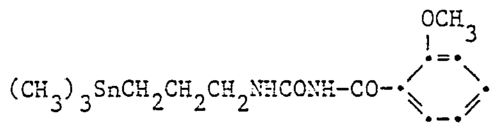

30. A composition according to claim 5, which contains as active ingredient the compound of the formula

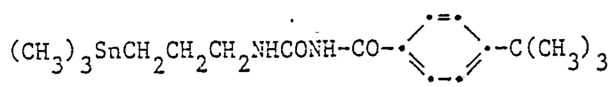

31. A process for the preparation of an N-(3-trimethylstannylalkylene)-N'-phenylsulfonyl- or -benzoylurea of the formula

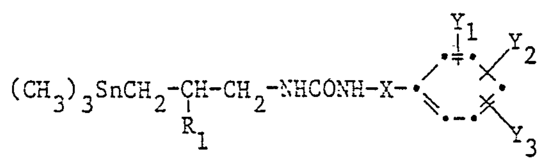

(I)

wherein $R_1$ is hydrogen, $C_1$-$C_6$alkyl or $C_3$-$C_8$cycloalkyl, X is —CO— or —$SO_2$—, and each of $Y_1$, $Y_2$ and $Y_3$ independently is hydrogen, halogen, $C_1$-$C_6$alkyl, $C_1$-$C_6$haloalkyl, $C_1$-$C_6$alkoxy or nitro, which process comprises reacting, in the presence or absence of a catalyst and of a solvent,

a) a compound of the formula

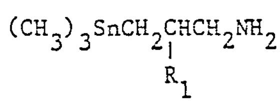

with a compound of the formula

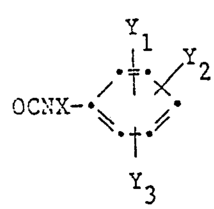

or

b) the compound of the formula

$(CH_3)_3SnH$

with a compound of the formula

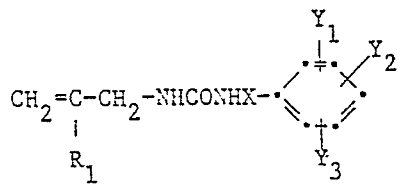

wherein $R_1$, X, $Y_1$, $Y_2$ and $Y_3$ are as defined for formula I.

32. A method of controlling pests on animals and plants, which method comprises applying a pesticidally effective amount of a composition according to claim 1.

33. A method according to claim 32 for controlling insects and members of the order Acarina.

**Revendications** (pour les Etats contractants : BE, CH, DE, FR, GB, IT, LI, NL)

1. N-(3-triméthylstannylalcoylène)-N'-phénylsulfonyl- resp. benzoyl-urées de formule

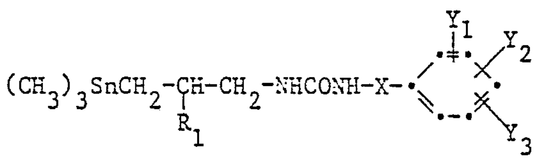

(I)

où $R_1$ représente un hydrogène, un alcoyle en $C_1$ à $C_6$ ou un cycloalcoyle en $C_3$ à $C_8$, X représente —CO— ou —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

2. Composé selon la revendication 1 où $R_1$ représente un hydrogène, X représente —CO— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

3. Composé selon la revendication 1 où $R_1$ représente un hydrogène, X représente —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

4. Composé selon la revendication 1, où $R_1$ représente un alcoyle en $C_1$ à $C_6$ ou un cycloalcoyle en $C_3$ à $C_8$, X représente —CO— ou —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

5. Composé selon la revendication 2, où $R_1$ représente un hydrogène, X représente —CO—, $Y_1$ représente un halogène, un alcoyle en $C_1$ à $C_6$, un halogénalcoyle en $C_1$ à $C_6$, un alcoxy en $C_1$ à $C_6$ ou un nitro et $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

6. Composé selon la revendication 5, où $R_1$ représente un hydrogène, X représente —CO—, $Y_1$ représente un fluor, un chlore, un méthyle, un méthoxy ou un nitro et $Y_2$ et $Y_3$ représentent indépendamment l'un de l'autre un hydrogène, un fluor, un chlore, un méthyle ou un méthoxy.

7. Composé selon la revendication 4 où $R_1$ représente un méthyle, X représente —CO—, $Y_1$ représente un hydrogène, un fluor, un chlore, un méthyle, un méthoxy ou un nitro et $Y_2$ et $Y_3$ représentent indépendamment l'un de l'autre un hydrogène, un fluor, un chlore, un méthyle ou un méthoxy.

8. Le composé selon la revendication 7 de formule

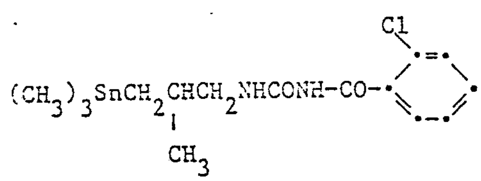

9. Le composé selon la revendication 7 de formule

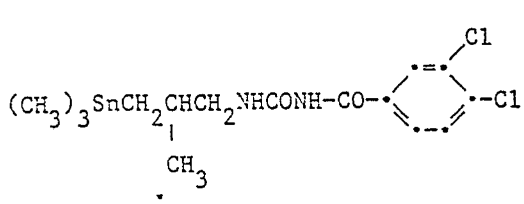

10. Le composé selon la revendication 7 de formule

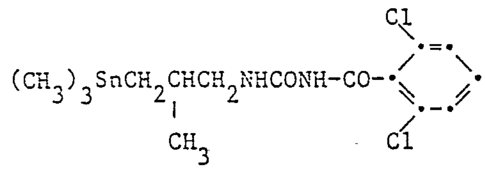

11. Le composé selon la revendication 7 de formule

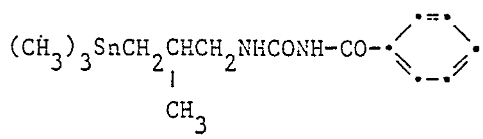

12. Le composé selon la revendication 7 de formule

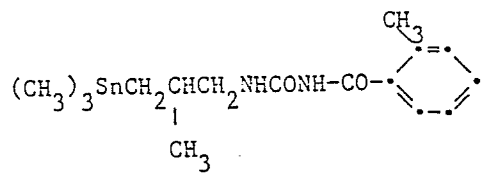

13. Le composé selon la revendication 7 de formule

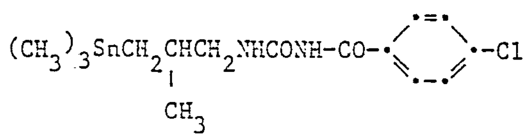

14. Le composé selon la revendication 7 de formule

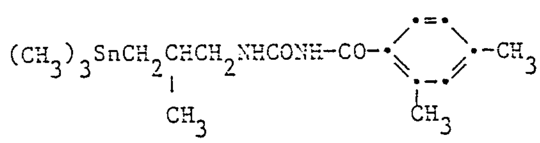

15. Le composé selon la revendication 7 de formule

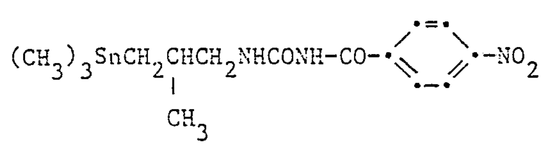

16. Le composé selon la revendication 7 de formule

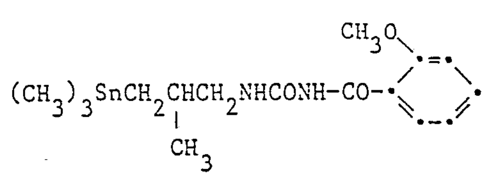

17. Le composé selon la revendication 4 de formule

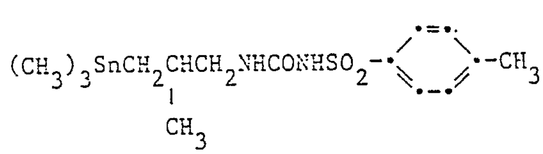

18. Le composé selon la revendication 3 de formule

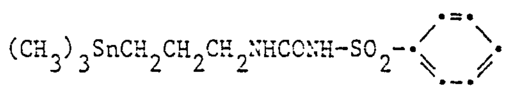

19. Le composé selon la revendication 6 de formule

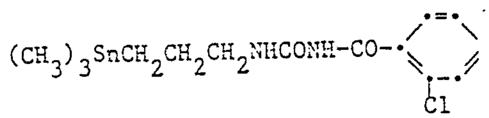

20. Le composé selon la revendication 6 de formule

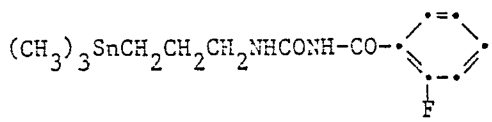

21. Le composé selon la revendication 6 de formule

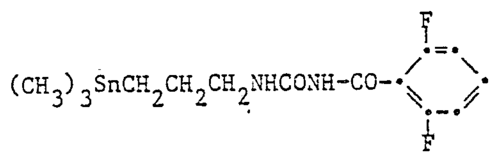

22. Le composé selon la revendication 6 de formule

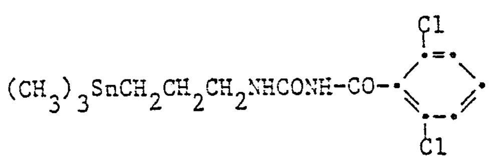

23. Le composé selon la revendication 2 de formule

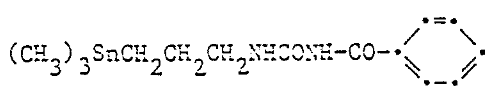

24. Le composé selon la revendication 6 de formule

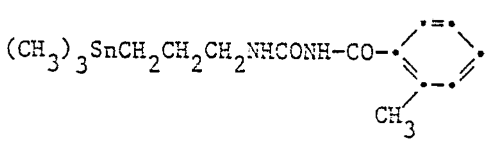

25. Le composé selon la revendication 6 de formule

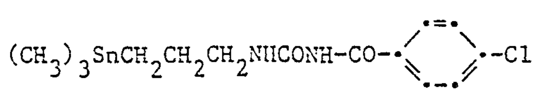

26. Le composé selon la revendication 6 de formule

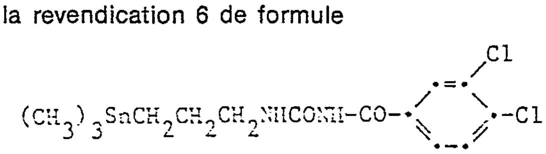

27. Le composé selon la revendication 6 de formule

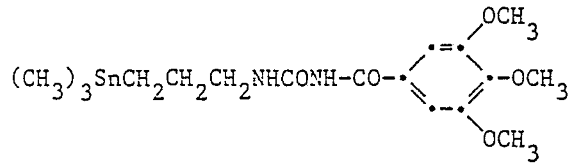

28. Le composé selon la revendication 6 de formule

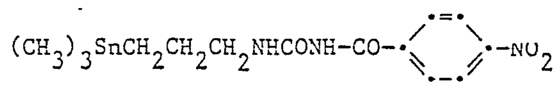

29. Le composé selon la revendication 6 de formule

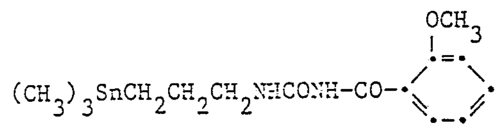

30. Le composé selon la revendication 5 de formule

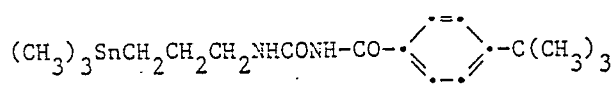

31. Procédé de préparation de composés selon la revendication 1, caractérisé en ce que, éventuellement en présence d'un catalyseur et d'un solvant

a) on fait réagir un composé de formule

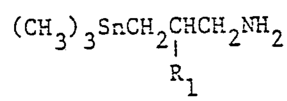

avec un composé de formule

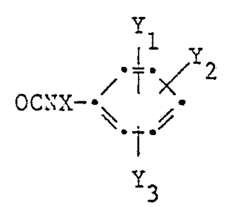

b) on fait réagir le composé de formule

$(CH_3)_3SnH$

avec un composé de formule

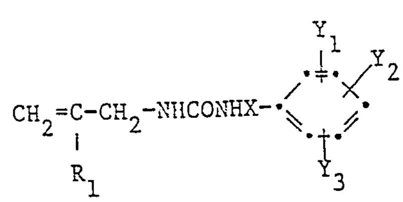

où $R_1$, X, $Y_1$, $Y_2$ et $Y_3$ ont la signification donnée dans la revendication 1.

32. Agent de lutte antiparasitaire, contenant outre un support et/ou autre additif approprié, comme composant actif un composé selon la revendication 1.

33. Application d'un composé selon la revendication 1 à la lutte contre les parasites chez les animaux et les plantes.

34. Application selon la revendication 33 à la lutte contre les insectes et les représentants de l'ordre des acariens.

**Revendications** (pour l'Etat contractant AT)

1. Agent de lutte antiparasitaire contenant, outre des additifs liquides et solides, comme composant actif une N-(3-triméthylstannylalcoylène)-N'-phénylsulfonyl- resp. benzoyl-urée de formule

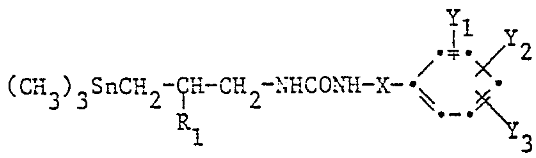

(I)

où $R_1$ représente un hydrogène, un alcoyle en $C_1$ à $C_6$ ou un cycloalcoyle en $C_3$ à $C_8$, X représente —CO— ou —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

2. Agent selon la revendication 1, où dans la formule I $R_1$ représente un hydrogène, X représente —CO— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

3. Agent selon la revendication 1, où dans la formule I $R_1$ représente un hydrogène, X représente —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

4. Agent selon la revendication I, où dans la formule 1 $R_1$ représente un alcoyle en $C_1$ à $C_6$ ou un cycloalcoyle en $C_3$ à $C_8$, X représente —CO— ou —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

5. Agent selon la revendication 2, où dans la formule I $R_1$ représente un hydrogène, X représente —CO—, $Y_1$ représente un halogène, un alcoyle en $C_1$ à $C_6$, un halogénalcoyle en $C_1$ à $C_6$, un alcoxy en $C_1$ à $C_6$ ou un nitro et $Y_2$ et $Y_3$ représentent, indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro.

6. Agent selon la revendication 5, où dans la formule I $R_1$ représente un hydrogène, X représente —CO—, $Y_1$ représente un fluor, un chlore, un méthyle, un méthoxy ou un nitro et $Y_2$ et $Y_3$ représentent indépendamment l'un de l'autre un hydrogène, un fluor, un chlore, un méthyle ou un méthoxy.

7. Agent selon la revendication 4, où dans la formule I $R_1$ représente un méthyle, X représente —CO—, $Y_1$ représente un hydrogène, un fluor, un chlore, un méthyle, un méthoxy ou un nitro et $Y_2$ et $Y_3$ représentent indépendamment l'un de l'autre un hydrogène, un fluor, un chlore, un méthyle ou un méthoxy.

8. Agent selon la revendication 7, qui contient comme composant actif le composé de formule.

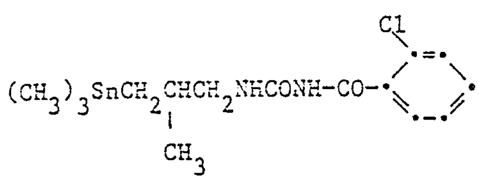

9. Agent selon la revendication 7, contenant comme composant actif le composé de formule

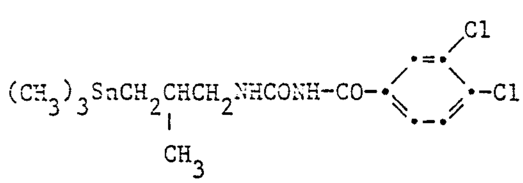

10. Agent selon la revendication 7, contenant comme composant actif le composé de formule

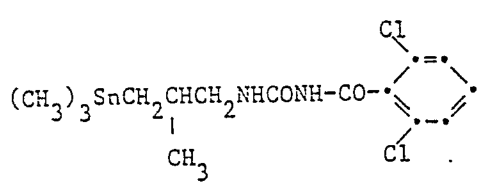

11. Agent selon la revendication 7, contenant comme composant actif le composé de formule

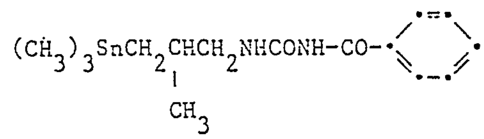

12. Agent selon la revendication 7, contenant comme composant actif le composé de formule

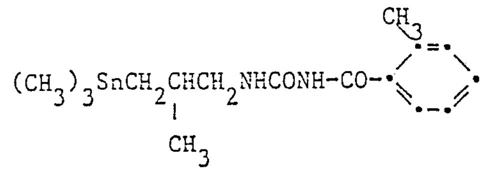

13. Agent selon la revendication 7, contenant comme composant actif le composé de formule

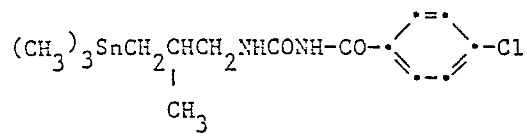

14. Agent selon la revendication 7, contenant comme composant actif le composé de formule

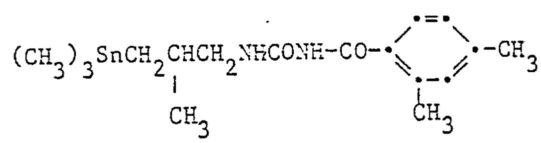

15. Agent selon la revendication 7, contenant comme composant actif le composé de formule

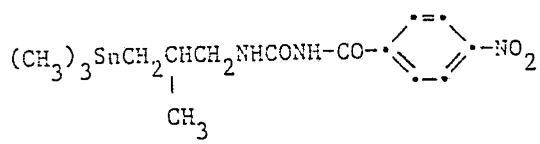

16. Agent selon la revendication 7, contenant comme composant actif le composé de formule

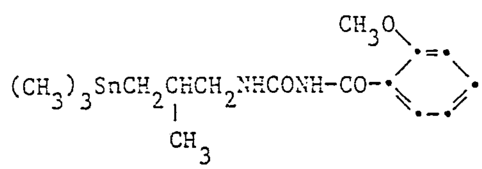

17. Agent selon la revendication 4, contenant comme composant actif le composé de formule

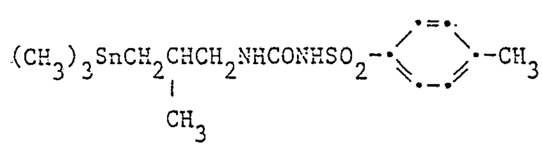

18. Agent selon la revendication 3, contenant comme composant actif le composé de formule

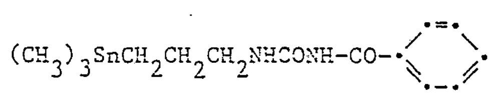

19. Agent selon la revendication 6, contenant comme composant actif le composé de formule

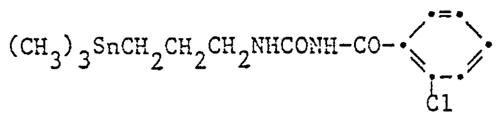

20. Agent selon la revendication 6, contenant comme composant actif le composé de formule

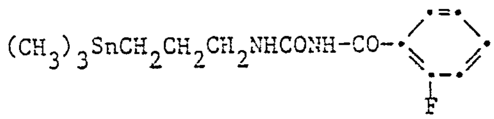

21. Agent selon la revendication 6, contenant comme composant actif le composé de formule

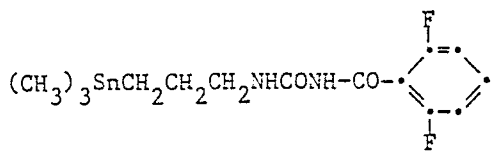

22. Agent selon la revendication 6, contenant comme composant actif le composé de formule

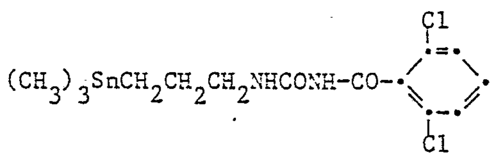

23. Agent selon la revendication 2, contenant comme composant actif le composé de formule

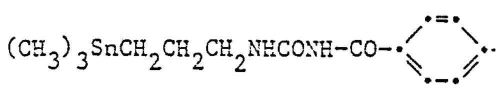

24. Agent selon la revendication 6, contenant comme composant actif le composé de formule

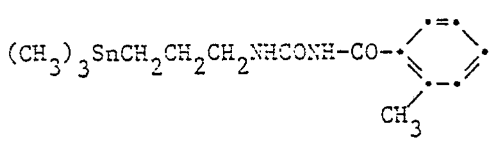

25. Agent selon la revendication 6, contenant comme composant actif le composé de formule

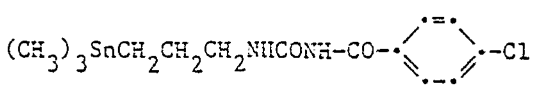

26. Agent selon la revendication 6, contenant comme composant actif le composé de formule

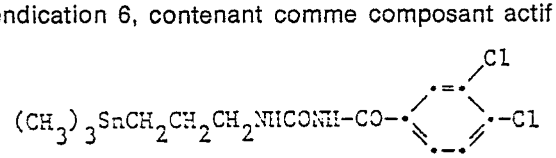

27. Agent selon la revendication 6, contenant comme composant actif le composé de formule

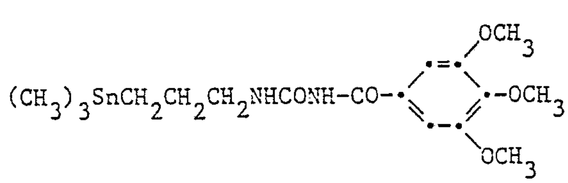

28. Agent selon la revendication 6, contenant comme composant actif un composé de formule

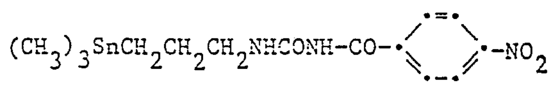

29. Agent selon la revendication 6, contenant comme composant actif le composé de formule

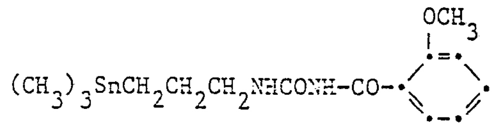

30. Agent selon la revendication 5, contenant comme composant actif le composé de formule

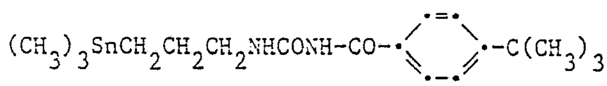

31. Procédé de préparation de N-(3-triméthylstannylalcoylène)-N'-phénylsulfonyl- resp. benzoylurées de formule

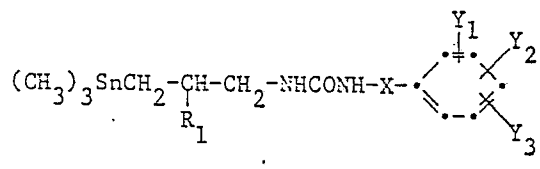

(I)

où $R_1$ représente un hydrogène, un alcoyle en $C_1$ à $C_6$ ou un cycloalcoyle en $C_3$ à $C_8$, X représente —CO— ou —$SO_2$— et $Y_1$, $Y_2$ et $Y_3$ représentent indépendamment l'un de l'autre un hydrogène, un halogène, un alcoyle en $C_1$ à $C_6$, un halogénalcoyle en $C_1$ à $C_6$, un alcoxy en $C_1$ à $C_6$ ou un nitro, en ce que éventuellement en présence d'un catalyseur et d'un solvant

a) on fait réagir un composé de formule

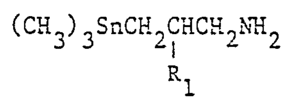

avec un composé de formule

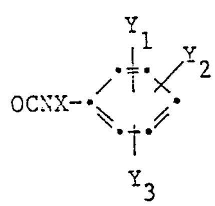

ou

b) on fait réagir le composé de formule

$(CH_3)_3SnH$

avec un composé de formule

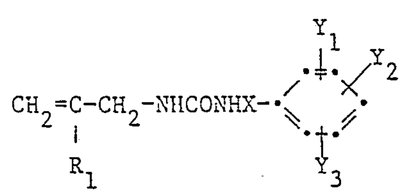

où $R_1$, X, $Y_1$, $Y_2$ et $Y_3$ ont la signification donnée pour la formule I.

32. Application d'un agent selon la revendication 1 à la lutte contre les parasites chez les animaux et les plantes.

33. Application selon la revendication 32 à la lutte contre les insectes et les représentants de l'ordre des acariens.